# EUROPÄISCHE PATENTSCHRIFT

(11) **EP 3 659 317 B1**
(45) Veröffentlichungstag und Bekanntmachung des Hinweises auf die Patenterteilung: **31.03.2021**
(21) Anmeldenummer: 18759907.1
(22) Anmeldetag: 20.08.2018
(51) Int. Cl.: H04L 29/06, G06F 21/64, H04L 29/08

(54) **VERFAHREN ZUM BEREITSTELLEN EINES SICHEREN TELEGRAMMS**
METHOD FOR PROVIDING A SECURE TELEGRAM
PROCÉDÉ POUR PRODUIRE UN TÉLÉGRAMME FIABLE

(30) Priorität: 19.09.2017 DE 102017216577
(43) Veröffentlichungstag der Anmeldung: 03.06.2020
(73) Patentinhaber: Siemens Mobility GmbH, 81739 München (DE)
(72) Erfinder: GIESECKE, Jörn, 38302 Wolfenbüttel (DE); GÜCKEL, Hartmut, 31228 Peine (DE)
(86) Internationale Anmeldenummer: PCT/EP2018/072396
(87) Internationale Veröffentlichungsnummer: WO 2019/057415

(56) Entgegenhaltungen:
- DE-A1- 10 011 887
- DE-A1- 10 040 866
- DE-A1- 10 065 907
- FORIN P: "Vital coded microprocessor principles and application for various transit systems", CONTROL, COMPUTERS, COMMUNICATIONS IN TRANSPORTATION : SELECTED PAPERS FROM THE IFAC/IFIP/IFORS SYMPOSIUM, PARIS, FRANCE, 19 - 21 SEPTEMBER, PERGAMON, OXFORD, GB, 19. September 1989 (1989-09-19), Seiten 79-84, XP008145769, ISBN: 978-0-08-037025-5

## Beschreibung

Die Erfindung betrifft ein Verfahren zum Bereitstellen eines sicheren Telegramms mit einem Nutzdaten aufweisenden Nutzdatenteil und einem Prüfdatenteil, wobei der Prüfdatenteil unverfälschte Originalnutzdaten repräsentiert. Ferner betrifft die Erfindung ein Computerprogrammprodukt mit Programmcode zur Durchführung des erfindungsgemäßen Verfahrens.

DE 10 065 907 A1 offenbart ein Verfahren für die Verwendung eines Zwischenregisters mit hochredundanten Daten, dessen Inhalt ohne Sicherheitsverlust über jedes Medium mit statistischen oder systematischen Fehlerkomponenten transportiert werden kann. Der Inhalt des Zwischenregisters auf der Senderseite wird in ein Zwischenregister auf der Empfängerseite kopiert, sodass nahezu alle Fehler mit einer speziellen Technik mit redundanten Mikroprozessoren beseitigt werden können.

In FORIN P: "Vital coded microprocessor principles and application for various transit systems", CONTROL, COMPUTERS, COMMUNICATIONS IN TRANSPORTATION: SELECTED PAPERS FROM THE IFAC/IFIP/IFORS SYMPOSIUM, PARIS, FRANCE, 19 - 21 SEPTEMBER 1989, PERGAMON, OXFORD, GB, pps 79-84, XP008145769, ISBN: 978-0-08-037025-5 offenbart ein Verfahren zum Bereitstellen eines Telegramms mit einem Nutzdaten aufweisenden Nutzdatenteil, bei dem die Originalnutzdaten in einer sicheren Softwareumgebung (coded processor) gespeichert werden.

Sichere Telegramme werden zur sicheren Kommunikation zwischen sicheren Steuereinheiten, beispielsweise in der Eisenbahnsicherungstechnik, verwendet. Bei auf dem Markt befindlichen Vorrichtungen zum Erzeugen sicherer Telegramme ist das Format des Prüfdatenteils vorbestimmt und kann nicht ohne Weiteres geändert werden. Jedoch weicht dieses vorbestimmte Format oftmals von einem gewünschten Format, das von einer Telegrammempfangseinrichtung, also etwa eine Steuereinheit, erwartet wird, ab.

Zur Bereitstellung der sicheren Telegramme werden oft sichere Softwareumgebungen verwendet. Dabei findet die Verarbeitung der Daten des Telegramms, also die Nutzdaten und die Prüfdaten des Prüfdatenteils, zur Erzeugung des sicheren Telegramms beispielsweise in der sicheren Softwareumgebung statt, z. B. mit einer nachgewiesenen Sicherheit gemäß der geforderten Sicherheitsanforderungsstufe (safety integrity level SIL), d. h. es gibt eine garantierte Fehlerwahrscheinlichkeit. Die Anforderungen dazu sind z. B. in der IEC 61508 und branchenspezifischen Normen (z. B. CENELEC: EN 50128) definiert.

Die sichere Softwareumgebung ermöglicht eine korrekte Bearbeitung mit einer für die Anwendung hinreichenden Fehlerwahrscheinlichkeit (Tolerable Hazard Rate). Damit sind weitere Maßnahmen nicht notwendig, um gefährliche Zustände abzuwehren.

Die Mechanismen zur Gewährleistung der Sicherheit können ein abgeschlossenes System, reglementierte Zugriffe vom und zum nicht sicheren Teil, interne Überwachung und Fehleraufdeckung nach Stand der Technik, z. B. zweikanalige Bearbeitung, Codierung, und/oder eine Zulassung umfassen.

Im Gegensatz zur sicheren Softwareumgebung erfolgt die Datenverarbeitung in einer nicht sicheren Softwareumgebung ohne garantierte Fehlerwahrscheinlichkeit. Eine falsche Reaktion durch einen zufälligen oder systematischen Ausfall oder Fehler ist jederzeit anzunehmen.

Zum Beispiel müssen für eine sichere Prozesssteuerung die SIL Anforderung für die gesamte Prozessverarbeitung, insbesondere für das Einlesen von Prozessdaten, die Verarbeitung der Prozessdaten in der sicheren Softwareumgebung, und das Ausgeben der sicheren Prozessdaten sichergestellt werden.

Statt Einlesen oder Ausgeben von Prozessdaten über I/O Baugruppen kann in komplexen Sicherheitsanwendungen auch die Kopplung von zwei oder mehr sicheren Softwareumgebungen über eine nicht sichere Kommunikationsstrecke erforderlich sein. Um beliebige Verfälschungen (systematische und zufällige) der Nutzdaten auf der Kommunikationsstrecke beim Empfänger mit ausreichender Sicherheit (SIL) aufzudecken, werden die Nutzdaten mit einem Prüfdatenanteil ergänzt als sicheres Telegramm versendet.

Sichere Telegramme werden oftmals mit einem beispielsweise die Originaldaten aufweisenden Nutzdatenteil von einem ersten Kanal und einem die Prüfdaten aufweisenden Prüfdatenteil von einem zweiten Kanal erstellt, um die Mitwirkung beider Kanäle bei der Erstellung sicher zu stellen. Die korrekte Erstellung der Nutzdaten und des Prüfdatenanteils wird durch den Empfänger überprüft. Um die Mitwirkung des codierten Kanals bei Coded Monoprozessoren zu erreichen, ist das codierte Ergebnis zurück zu codieren, was in der Regel auf Anwenderebene nicht möglich ist.

Die der Erfindung zugrundeliegende Aufgabe besteht also darin, ein Verfahren zum Erzeugen eines sicheren Telegramms mit Nutzdaten und Prüfdaten bereitzustellen, das auf Anwenderebene erstellbar ist, selbst wenn ein Coded Monoprozessor verwendet wird.

Erfindungsgemäß wird ein Verfahren der eingangs genannten Art gemäß Anspruch 1 bereitgestellt, wobei die Originalnutzdaten in einer sicheren Softwareumgebung gespeichert und womöglich vorab erstellt werden. Eine Nutzdatenkopie der Originalnutzdaten wird außerhalb der sicheren Softwareumgebung gespeichert. Außerhalb der sicheren Softwareumgebung kann eine andere Softwareumgebung bedeuten, wobei diese andere Softwareumgebung wiederum eine andere sichere Softwareumgebung oder eine unsichere Softwareumgebung, die die Erfordernisse an sichere Softwareumgebung nicht erfüllt, sein kann.

Der Prüfdatenteil wird mit Originalprüfdaten in der sicheren Softwareumgebung oder außerhalb der sicheren Softwareumgebung erzeugt, z. B. basierend auf den Originalnutzdaten oder der Nutzdatenkopie, und eine Prüfdatenkopie der Originalprüfdaten wird außerhalb der sicheren Softwareumgebung gespeichert, wenn diese in der sicheren Softwareumgebung erzeugt wurde. Eine Kopie der Nutzdatenkopie wird in der sicheren Softwareumgebung mit den Originalnutzdaten und/oder einer Repräsentation der Originalnutzdaten verglichen. Alternativ wird zusätzlich eine Kopie der Prüfdatenkopie in der sicheren Softwareumgebung mit den Originalprüfdaten und/oder der Repräsentation der Originalprüfdaten verglichen. Die Repräsentation kann die Originalprüfdaten und/oder einen die Originalprüfdaten repräsentierenden Datensatz, im einfachsten Fall eine Prüfsumme oder die Originalnutzdaten, aufweisen.

Das Telegramm wird mit der Nutzdatenkopie als Nutzdaten und dem Prüfdatenteil erst bereitgestellt, wenn der Vergleich ergeben hat, dass die Kopie der Nutzdatenkopie den Originalnutzdaten entspricht und/oder die Kopie der Prüfdatenkopie den Originalprüfdaten entspricht beziehungsweise die Originalprüfdaten repräsentiert. Wenn der Prüfdatenteil in der sicheren Softwareumgebung erstellt wird, dann kann eine Prüfdatenkopie erstellt und ein Vergleich einer Kopie der Prüfdatenkopie mit den Originalprüfdaten in der sicheren Softwareumgebung durchgeführt werden.

Dadurch, dass eine Kopie der Nutzdatenkopie in der sicheren Softwareumgebung mit den Originalnutzdaten und/oder einer Repräsentation der Originalnutzdaten, und/oder eine Kopie der Prüfdatenkopie mit den Originalprüfdaten und/oder der Repräsentation der Originalprüfdaten verglichen wird, können Fehler bei der Erstellung der Nutzdatenkopie und/oder des Prüfdatenteils mit ausreichender Sicherheit erkannt werden, selbst wenn die andere Softwareumgebung keine sichere Softwareumgebung ist oder die Nutzdatenkopie und/oder die Prüfdatenkopie nicht sicher (z. B. ohne Mitwirkung des kodierten Kanals) erstellt wurden. Die Erstellung des Prüfdatenteils außerhalb der sicheren Softwareumgebung bietet eine höhere Flexibilität und Performanz bei der Erstellung eines gewünschten Formats des Prüfdatenteils.

Die erfindungsgemäße Lösung kann durch verschiedene, jeweils für sich vorteilhafte und, sofern nicht anders ausgeführt, beliebig miteinander kombinierbare Ausgestaltungen weiter verbessert werden. Auf diese Ausgestaltungsformen und die mit ihnen verbundenen Vorteile ist im Folgenden eingegangen:
So kann die Bereitstellung des Telegramms sicher verhindert werden, bis der Vergleich erfolgreich war, also ergeben hat, dass die Kopie der Nutzdatenkopie den Originalnutzdaten entspricht. Folglich wird sichergestellt, dass ein fehlerhaftes Telegramm nicht versendet wird.

Zum Vergleich kann die Kopie der Nutzdatenkopie verwendet werden. Bei der Erstellung der Prüfdaten in der sicheren Softwareumgebung kann alternativ zusätzlich der Vergleich der Kopie der Prüfdatenkopie durchgeführt werden.

Gemäß einer weiteren Ausgestaltungsform kann zum Verhindern der Bereitstellung des Telegramms ein Telegrammsendekanal blockiert werden, z. B. durch ausschalten der Stromversorgung von den Telegrammsendekanal bereitstellender Hardware. Selbst ein versehentliches Versenden des Telegramms wird hierdurch sicher verhindert.

Gemäß einer weiteren Ausgestaltungsform kann zum Bereitstellen des Telegramms der Telegrammsendekanal freigegeben werden, wenn der Vergleich erfolgreich war, also ergeben hat, dass die Nutzdatenkopie den Originalnutzdaten entspricht und/oder die Prüfdatenkopie den Originalprüfdaten entspricht beziehungsweise diese die Originalprüfdaten repräsentiert. Zum Beispiel kann bei einem erfolgreich abgeschlossenen Vergleich ein Freigabesignal erzeugt werden, anhand dessen die Stromversorgung für die den Telegrammsendekanal bereitstellende Hardware wieder mit Betriebsenergie versorgt wird. Die aktive Freigabe verbessert die Sicherheit weiter, da ohne diese aktive Freigabe das Telegramm nicht versendet werden kann.

Alternativ oder zusätzlich zum Blockieren des Telegrammsendekanals kann gemäß einer weiteren Ausgestaltungsform zum Verhindern der Bereitstellung des Telegramms ein temporäres Telegramm mit einem die Originalnutzdaten nicht repräsentierenden Prüfdatenteil erstellt (z. B. systematisch verfälschter Prüfdatenteil) werden. Hardware zum Blockieren des Telegrammsendekanal, etwa zum Ein- und Ausschalten der Betriebsenergie für die den Telegrammsendekanal bereitstellende Hardware, ist dann nicht erforderlich oder das Versenden eines ungeprüften Telegramms wird noch sicherer verhindert. Die Wahrscheinlichkeit, dass eine womöglich inkorrekt erzeugte Nutzdatenkopie von dem die Originalnutzdaten nicht repräsentierenden Prüfdatenteil repräsentiert wird ist in der Regel so gering, dass die geforderte Sicherheit des Telegramms ohne zusätzliche Hardware weiterhin gewährleistet ist.

Gemäß einer weiteren Ausgestaltungsform kann zum Bereitstellen des Telegramms das Telegramm aus dem temporären Telegramm erzeugt werden, wobei zum Erzeugen des Telegramms der die Originalnutzdaten nicht repräsentierende Prüfdatenteil durch den die Originalnutzdaten repräsentierende Prüfdatenteil ersetzt wird, wenn der Vergleich erfolgreich war, also ergeben hat, dass die Nutzdatenkopie den Originalnutzdaten entspricht und/oder der Prüfdatenteil die Originalnutzdaten repräsentiert. Zum Ersetzen kann der die Originalnutzdaten nicht repräsentierende Prüfdatenteil vollständig oder teilweise durch den die Originalnutzdaten repräsentierenden Prüfdatenteil ersetzt werden. Wenn der die Originalnutzdaten nicht repräsentierende Prüfdatenteil in bekannter Weise von dem die Originalnutzdaten repräsentierende Prüfdatenteil abweicht, kann dieser auch in den die Originalnutzdaten repräsentierenden Prüfdatenteil gewandelt und z. B. umgerechnet werden. Hierdurch wird sichergestellt, dass ein womöglich inkorrekte Nutzdaten aufweisendes Telegramm sicher vom Empfänger des Telegramms erkannt wird, sodass der Empfänger das Telegramm nicht verwendet, solange der Vergleich nicht erfolgreich abgeschlossen ist.

Gemäß einer weiteren Ausgestaltungsform kann die Kopie der Nutzdatenkopie und/oder die Kopie der Prüfdatenkopie in der sicheren Softwareumgebung sicher mit den Originalnutzdaten und/oder Prüfdatenkopie oder der Repräsentation der Originalnutzdaten verglichen werden. Dieser sichere Vergleich kann also zweikanalig und insbesondere mit Daten aus dem zweiten Kanal, oder mit dem Coded Monoprozesor und insbesondere mit dem kodierten Ergebnis erfolgen, sodass bereits vorhandene Softwareumgebungen erneut genutzt werden können.

Gemäß einer weiteren Ausgestaltungsform kann die Repräsentation ein mit den Originalnutzdaten in der sicheren Softwareumgebung erzeugter sicherer Datensatz sein, was die Sicherheit weiter erhöht.

Gemäß einer weiteren Ausgestaltungsform kann der in der sicheren Umgebung erzeugte sichere Datensatz ein anderes Format aufweisen als der Prüfdatenteil. Folglich kann der Prüfdatenteil mit einem gewünschten Format ausgebildet werden, selbst wenn dies mit dem zweikanaligen Verfahren oder dem Coded Monoprozessor ansonsten nicht möglich ist.

Erfindungsgemäß wird auch ein Computerprogrammprodukt gemäß Anspruch 8 bereitgestellt. Gemäß einer weiteren Ausgestaltungsform kann das Computerprogrammprodukt ein tragbarer Datenträger, z. B. ein magnetischer, ein optischer oder ein elektronischer Datenträger sein. Alternativ kann das Computerprogrammprodukt auf einem in einem Server installierten Datenträger gespeichert sein. Die oben beschriebenen Eigenschaften, Merkmale und Vorteile dieser Erfindung sowie die Art und Weise, wie diese erreicht werden, werden klarer und deutlicher verständlich im Zusammenhang mit der vorliegenden Beschreibung des Ausführungsbeispiels, das im Zusammenhang mit der Zeichnung näher erläutert wird. Es zeigt:

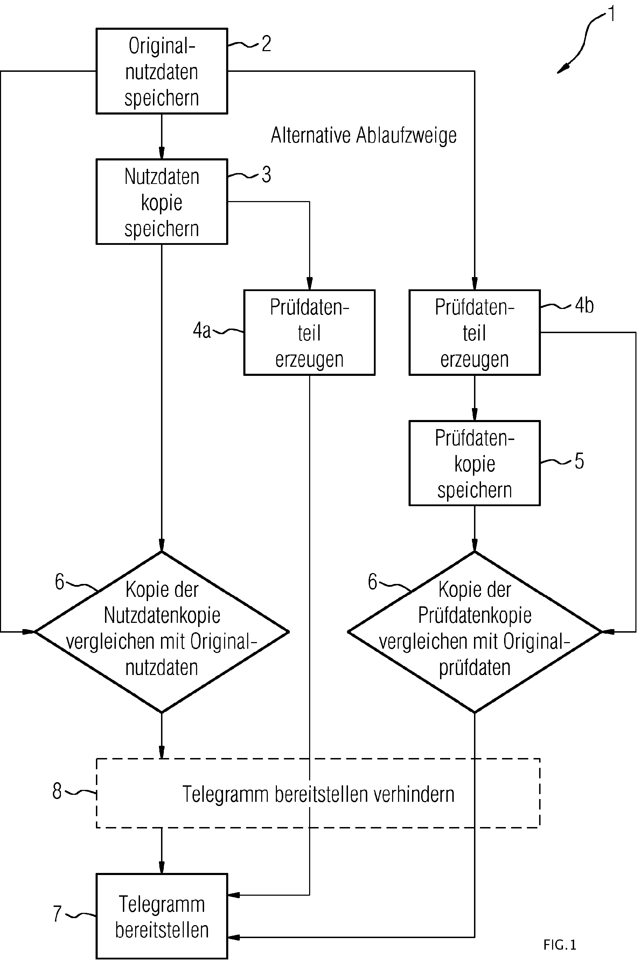

- Figur 1: eine schematische Ansicht eines Ausführungsbei-spiels des erfindungsgemäßen Verfahrens als ein Flussdiagramm.

Im Folgenden ist die Erfindung beispielhaft anhand einer Ausführungsform mit Bezug auf die Zeichnung erläutert. Die unterschiedlichen Merkmale der Ausführungsform können dabei unabhängig voneinander kombiniert werden, wie es bei den einzelnen Ausgestaltungen bereits dargelegt wurde. Der dargestellte Ablauf und insbesondre die Reihenfolge der einzelnen Verfahrensschritte kann von der Darstellung abweichen. Vielmehr zeigt die Figur 1 ein Ausführungsbeispiel eines möglichen Datenflusses des erfindungsgemäßen Verfahrens.

Figur 1 zeigt schematisch ein Ausführungsbeispiel des erfindungsgemäßen Verfahrens 1 als ein Flussdiagramm. Das Verfahren 1 startet beispielsweise mit dem Verfahrensschritt 2, in dem die Originalnutzdaten in einer sicheren Softwareumgebung gespeichert und womöglich vorab erstellt werden. Im nun folgenden Verfahrensschritt 3 wird eine Nutzdatenkopie der Originalnutzdaten außerhalb der sicheren Softwareumgebung und z. B. in einer anderen sicheren oder in einer nicht sicheren Softwareumgebung gespeichert. Im nun Verfahrensschritt 4 wird der Prüfdatenteil mit Originalprüfdaten in der sicheren Softwareumgebung 4b oder außerhalb der sicheren Softwareumgebung 4a erzeugt. Wenn der Prüfdatenteil in der sicheren Softwareumgebung erzeugt wurde, folgt auf den Verfahrensschritt 4b der Verfahrensschritt 5. Im Verfahrensschritt 5 wird eine Prüfdatenkopie der Originalprüfdaten außerhalb der sicheren Softwareumgebung gespeichert. Im Verfahrensschritt 6 wird eine Kopie der Nutzdatenkopie in der sicheren Softwareumgebung mit den Originalnutzdaten und/oder einer Repräsentation der Originalnutzdaten verglichen. Alternativ wird zusätzlich im Verfahrensschritt 6 eine Kopie der Prüfdatenkopie in der sicheren Softwareumgebung mit den Originalprüfdaten und/oder der Repräsentation der Originalprüfdaten verglichen. Wenn der Vergleich ergibt, dass die Kopie der Nutzdatenkopie den Originalnutzdaten entspricht und/oder von der Repräsentation der Originalnutzdaten repräsentiert wird, und/oder die Kopie der Prüfdatenkopie den Originalprüfdaten entspricht oder diese repräsentiert, wird in Verfahrensschritt 7 das Telegramm mit der Nutzdatenkopie als Nutzdaten und dem Prüfdatenteil bereitgestellt.

Beispielsweise wird die Kopie der Nutzdatenkopie und/oder die Kopie der Prüfdatenkopie und somit der Verfahrensschritt 6 in der sicheren Softwareumgebung sicher mit den Originalnutzdaten und/oder den Originalprüfdaten oder der Repräsentation der Originalnutzdaten verglichen.

Die Repräsentation kann ein mit den Originalnutzdaten in der sicheren Softwareumgebung erzeugter sicherer Datensatz sein, wobei der in der sicheren Umgebung erzeugte sichere Datensatz ein anderes Format aufweisen kann als der Prüfdatenteil.

In einem optionalen Verfahrensschritt 8 kann die Bereitstellung des Telegramms durch zusätzliche Maßnahmen sicher verhindert werden, bis der Vergleich ergeben hat, dass die Kopie der Nutzdatenkopie den Originalnutzdaten entspricht. Hierzu kann der Vergleich der Kopie der Nutzdatenkopie verwendet werden. Alternativ kann zusätzlich auch der erfolgreiche Vergleich der Kopie der Prüfdatenkopie verwendet werden.

Um die Bereitstellung des Telegramms zu verhindern, kann ein Telegrammsendekanal blockiert werden. Alternativ oder zusätzlich kann zum Verhindern der Bereitstellung des Telegramms ein temporäres Telegramm mit einem die Originalnutzdaten nicht repräsentierenden Prüfdatenteil erstellt werden.

Ist der Vergleich erfolgreich, sodass die Kopien den Originalen entsprechen oder diese repräsentieren, kann zum Bereitstellen des Telegramms der Telegrammsendekanal freigegeben werden. Alternativ oder zusätzlich kann zum Bereitstellen des Telegramms das Telegramm aus dem temporären Telegramm erzeugt werden, wobei zum Erzeugen des Telegramms der die Originalnutzdaten nicht repräsentierende Prüfdatenteil teilweise oder vollständig durch den die Originalnutzdaten repräsentierende Prüfdatenteil ersetzt oder anderweitig in den die Originalnutzdaten repräsentierenden Prüfdatenteil gewandelt wird.

## Patentansprüche

1. Verfahren (1) zum Bereitstellen eines sicheren Telegramms mit einem Nutzdaten aufweisenden Nutzdatenteil und einem Prüfdatenteil, wobei der Prüfdatenteil unverfälschte Originalnutzdaten repräsentiert, bei dem
- die Originalnutzdaten in einer sicheren Softwareumgebung, welche als abgeschlossenes System mit reglementiertem Zugriff vom und zum nicht sicheren Teil ausgeführt ist, gespeichert werden (2),
- eine Nutzdatenkopie der Originalnutzdaten außerhalb der sicheren Softwareumgebung gespeichert wird (3),
- der Prüfdatenteil mit Originalprüfdaten in der sicheren Softwareumgebung (4b) oder außerhalb der sicheren Softwareumgebung erzeugt wird (4a), und
- eine Prüfdatenkopie der Originalprüfdaten außerhalb der sicheren Softwareumgebung gespeichert wird, wenn der Prüfdatenteil in der sicheren Softwareumgebung erzeugt wurde (5),
- eine Kopie der Nutzdatenkopie in der sicheren Softwareumgebung mit den Originalnutzdaten und/oder einer Repräsentation der Originalnutzdaten verglichen wird, und
- eine Kopie der Prüfdatenkopie in der sicheren Softwareumgebung mit den Originalprüfdaten und/oder der Repräsentation der Originalprüfdaten verglichen wird (6), wenn die Prüfdatenkopie außerhalb der sicheren Softwareumgebung gespeichert wurde,
- das Telegramm mit der Nutzdatenkopie als Nutzdaten und dem Prüfdatenteil erst bereitgestellt wird, wenn der Vergleich ergeben hat, dass die Kopie der Nutzdatenkopie den Originalnutzdaten entspricht und
- die Kopie der Prüfdatenkopie den Originalprüfdaten entspricht (8), wenn die Prüfdatenkopie außerhalb der sicheren Softwareumgebung gespeichert wurde.

2. Verfahren nach Anspruch 1, **dadurch gekennzeichnet, dass** die Bereitstellung des Telegramms verhindert wird (8), bis der Vergleich ergeben hat, dass die Kopie der Nutzdatenkopie den Originalnutzdaten entspricht.

3. Verfahren nach Anspruch 2, **dadurch gekennzeichnet, dass** zum Verhindern der Bereitstellung des Telegramms ein Telegrammsendekanal blockiert wird (8).

4. Verfahren nach Anspruch 3, **dadurch gekennzeichnet, dass** zum Bereitstellen des Telegramms der Telegrammsendekanal freigegeben wird (7), wenn der Vergleich ergeben hat, dass die Nutzdatenkopie den Originalnutzdaten entspricht und/oder die Prüfdatenkopie den Originalprüfdaten entspricht.

5. Verfahren nach einem der Ansprüche 2 bis 4, **dadurch gekennzeichnet, dass** zum Verhindern der Bereitstellung des Telegramms ein temporäres Telegramm mit einem die Originalnutzdaten nicht repräsentierenden Prüfdatenteil erstellt wird (8) .

6. Verfahren nach Anspruch 5, **dadurch gekennzeichnet, dass** zum Bereitstellen des Telegramms das Telegramm aus dem temporären Telegramm erzeugt wird, wobei zum Erzeugen des Telegramms der die Originalnutzdaten nicht repräsentierende Prüfdatenteil durch den die Originalnutzdaten repräsentierende Prüfdatenteil ersetzt wird, wenn der Vergleich ergeben hat, dass die Nutzdatenkopie den Originalnutzdaten entspricht und/oder der Prüfdatenteil die Originalnutzdaten repräsentiert (7).

7. Verfahren nach einen der Ansprüche 1 bis 6, **dadurch gekennzeichnet, dass** die Kopie der Nutzdatenkopie und/oder die Kopie der Prüfdatenkopie in der sicheren Softwareumgebung sicher mit den Originalnutzdaten und/oder Prüfdatenkopie oder der Repräsentation der Originalnutzdaten verglichen wird (5), indem das Vergleichen zweikanalig mit Daten aus dem zweiten Kanal durchgeführt wird.

8. Computerprogrammprodukt mit Programmcode zur Durchführung des Verfahrens nach einem der Ansprüche 1 bis 7, wenn das Computerprogrammprodukt auf einem Computer ausgeführt wird.

## Claims

1. Method (1) for providing a secure telegram with a useful data part containing useful data and a test data part, wherein the test data part represents unadulterated original useful data, in which
- the original useful data is stored (2) in a secure software environment which is embodied as a closed system with regulated access from and to the non-secure part,
- a useful data copy of the original useful data is stored (3) outside the secure software environment,
- the test data part containing original test data is generated in the secure software environment (4b) or outside the secure software environment (4a), and
- a test data copy of the original test data is stored outside the secure software environment if the test data part was generated (5) in the secure software environment,
- a copy of the useful data copy in the secure software environment is compared with the original useful data and/or a representation of the original useful data, and
- a copy of the test data copy in the secure software environment is compared (6) with the original test data and/or the representation of the original test data if the test data copy was stored outside the secure software environment,
- the telegram containing the useful data copy as useful data and containing the test data part is provided only if the comparison has shown that the copy of the useful data copy corresponds to the original useful data and
- the copy of the test data copy corresponds (8) to the original test data if the test data copy was stored outside the secure software environment.

2. Method according to claim 1, **characterised in that** the provision of the telegram is prevented (8) until the comparison has shown that the copy of the useful data copy corresponds to the original useful data.

3. Method according to claim 2, **characterised in that** a telegram transmission channel is blocked (8) to prevent the telegram from being made available.

4. Method according to claim 3, **characterised in that** the telegram transmission channel is released (7) to provide the telegram if the comparison has shown that the useful data copy corresponds to the original useful data and/or the test data copy corresponds to the original test data.

5. Method according to one of claims 2 to 4, **characterised in that**, to prevent the telegram from being made available, a temporary telegram is created (8) containing a test data part not representing the original useful data.

6. Method according to claim 5, **characterised in that**, in order to provide the telegram, the telegram is generated from the temporary telegram, wherein to generate the telegram the test data part not representing the original useful data is replaced by the test data part representing the original useful data if the comparison has shown that the useful data copy corresponds to the original useful data and/or the test data part represents (7) the original useful data.

7. Method according to one of claims 1 to 6, **characterised in that** the copy of the useful data copy and/or the copy of the test data copy in the secure software environment is securely compared (5) with the original useful data and/or test data copy or the representation of the original useful data, **in that** the comparison is performed on a two-channel basis with data from the second channel.

8. Computer program product with program code for performing the method according to one of claims 1 to 7, when the computer program product is executed on a computer.

## Revendications

1. Procédé (1) pour disposer d'un télégramme sécurisé ayant une partie de données utiles comportant des données utiles et une partie de données de contrôle, la partie de données de contrôle représentant des données utiles originales non falsifiées, dans lequel
- on met en mémoire (2) les données utiles originales dans un environnement logiciel sécurisé, qui est réalisé sous la forme d'un système fermé à accès réglementé de la partie non sécurisée et vers la partie non sécurisée,
- on met en mémoire (3) une copie de données utiles des données utiles originales à l'extérieur de l'environnement logiciel sécurisé,
- on produit (4a) la partie de données de contrôle originales à l'extérieur de l'environnement logiciel sécurisé,
- on produit (4a) la partie de données de contrôle ayant des données de contrôle originales dans l'environnement (4b) logiciel sécurisé ou à l'extérieur de l'environnement logiciel sécurisé, et
- on met en mémoire (5) une copie de données de contrôle des données de contrôle originales à l'extérieur de l'environnement logiciel sécurisé, si la partie de données de contrôle a été produite dans l'environnement logiciel sécurisé,
- on compare une copie de la copie de données utiles dans l'environnement logiciel sécurisé aux données utiles originales et/ou à une représentation des données utiles originales, et
- on compare (6) une copie de la copie de données de contrôle dans l'environnement logiciel sécurisé aux données de contrôle originales et/ou à la représentation des données de contrôle originales, si la copie de données de contrôle a été mise en mémoire à l'extérieur de l'environnement logiciel sécurisé,
- on ne met à disposition le télégramme ayant la copie de données utiles comme données utiles et la partie de données de contrôle que si la comparaison a donné que la copie de la copie de données utiles correspond aux données utiles originales, et
- la copie de la copie de données de contrôle correspond (8) aux données de contrôle originales, si la copie de données de contrôle a été mise en mémoire à l'extérieur de l'environnement logiciel sécurisé.

2. Procédé suivant la revendication 1, **caractérisé en ce que**, l'on empêche (8) la mise à disposition du télégramme jusqu'à ce que la comparaison a donné que la copie de la copie de données utiles correspond aux données utiles originales.

3. Procédé suivant la revendication 2, **caractérisé en ce que**, pour empêcher la mise à disposition du télégramme, on bloque (8) un canal d'envoi de télégramme.

4. Procédé suivant la revendication 3, **caractérisé en ce que**, pour la mise à disposition du télégramme, on libère (7) le canal d'envoi de télégramme, si la comparaison a donné que la copie de données utiles correspond aux données utiles originales et/ou que la copie de données de contrôle correspond aux données de contrôle originales.

5. Procédé suivant l'une des revendications 2 à 4, **caractérisé en ce que**, pour empêcher la mise à disposition du télégramme, on établit (8) un télégramme temporaire ayant une partie de données de contrôle ne représentant pas les données utiles originales.

6. Procédé suivant la revendication 5, **caractérisé en ce que**, pour la mise à disposition du télégramme, on produit le télégramme à partir du télégramme temporaire, dans lequel pour la production du télégramme, on remplace la partie de données de contrôle ne représentant pas les données utiles originales par la partie de données de contrôle représentant les données utiles originales, si la comparaison a donné que la copie de données utiles correspond aux données utiles originales et/ou que la partie de données de contrôle représente (7) les données utiles originales.

7. Procédé suivant l'une des revendications 1 à 6, **caractérisé en ce que** l'on compare (5) la copie de la copie de données utiles et/ou la copie de la copie de données de contrôle dans l'environnement logiciel sécurisé d'une manière sécurisée aux données utiles originales et/ou à la copie de données de contrôle ou à la représentation des données utiles originales, en effectuant la comparaison par deux canaux avec des données du deuxième canal.

8. Produit de programme d'ordinateur ayant des codes de programme pour effectuer le procédé suivant l'une des revendications 1 à 7, lorsque le produit de programme d'ordinateur est réalisé sur un ordinateur.
